# EUROPÄISCHE PATENTSCHRIFT

(11) **EP 4 092 449 B1**
(45) Veröffentlichungstag und Bekanntmachung des Hinweises auf die Patenterteilung: **05.07.2023**
(21) Anmeldenummer: 21174969.2
(22) Anmeldetag: 20.05.2021
(51) Int. Cl.: G01V 8/12, G01V 8/14, G01V 8/20, G01V 8/22

(54) **LICHTSCHRANKENANORDNUNG UND VERFAHREN ZUR ERFASSUNG VON OBJEKTEN IN EINEM ÜBERWACHUNGSBEREICH**
LIGHT BARRIER ASSEMBLY AND METHOD FOR DETECTING OBJECTS IN A SURVEILLANCE AREA
AGENCEMENT DE BARRIÈRE LUMINEUSE ET PROCÉDÉ DE DÉTECTION DES OBJETS DANS UNE ZONE DE SURVEILLANCE

(43) Veröffentlichungstag der Anmeldung: 23.11.2022
(73) Patentinhaber: Leuze electronic GmbH + Co. KG, 73277 Owen/Teck (DE)
(72) Erfinder: Hörderich, Johann, 82291 Mammendorf (DE); Feller, Bernhard, 86316 Friedberg (DE)
(74) Vertreter: Ruckh, Rainer Gerhard

(56) Entgegenhaltungen:
- EP-A1- 3 822 666
- EP-B1- 3 614 182
- DE-B4-102018 117 878
- US-A- 5 218 196

## Beschreibung

Die Erfindung betrifft eine Lichtschrankenanordnung und ein Verfahren zur Erfassung von Objekten in einem Überwachungsbereich.

Im einfachsten Fall besteht die Lichtschrankenanordnung aus einer einzelnen Lichtschranke, das heißt die Sendereinheit der Lichtschrankenanordnung weist nur einen Sendelicht emittierenden Sender auf, welchem nur ein Empfänger in der Empfängereinheit der Lichtschrankenanordnung zugeordnet ist.

Generell kann die Lichtschrankenanordnung auch mehrere einzelne Lichtschranken aufweisen. Insbesondere kann die Lichtschrankenanordnung als Lichtvorhang ausgebildet sein, bei welchem in einem ersten Gehäuse der Sendereinheit mehrere Sender integriert sind und in einem zweiten Gehäuse der Empfängereinheit mehrere Empfänger integriert sind.

Generell sind die Sendereinheit und die Empfängereinheit an gegenüberliegenden Rändern eines Überwachungsbereichs angeordnet, innerhalb dessen mit der Lichtschrankenanordnung eine Objektdetektion erfolgt. Vor dem Betrieb der Lichtschrankenanordnung müssen die Sendereinheit und die Empfängereinheit so gegeneinander ausgerichtet werden, dass bei freiem Überwachungsbereich das Sendelicht jedes Senders auf den zugeordneten Empfänger trifft.

Eine Schwierigkeit besteht hierbei darin, dass die Sender im Allgemeinen Sendelicht im Infrarotbereich emittieren, das für das menschliche Auge nicht sichtbar ist.

Um die Sendereinheit und die Empfängereinheit gegeneinander auszurichten ist es bekannt, als Ausrichthilfe einen Laserpointer an der Sendereinheit zu fixieren. Der Laserpointer strahlt einen sichtbaren Laserstrahl ab, der auf die Empfängereinheit geführt ist. Anhand der auf der Empfängereinheit abgebildeten Laserlichtfläche kann die Empfängereinheit relativ zur Sendereinheit, oder umgekehrt, ausgerichtet werden.

Nachteilig hierbei ist, dass der Laserpointer eine zusätzliche Einrichtung darstellt, womit ein zusätzlicher Konstruktions- und Kostenaufwand verbunden ist. Weiterhin ist nachteilig, dass der Laserpointer an der Sendereinheit montiert werden muss, was umständlich und zeitaufwändig ist.

Die EP 3 614 182 B4 betrifft eine Lichtschrankenanordnung zur Erfassung von Objekten in einem Überwachungsbereich, mit wenigstens einem Sender und wenigstens einem Empfänger an gegenüberliegenden Rändern des Überwachungsbereichs, wobei bei freiem Überwachungsbereich vom Sender emittierte Lichtstrahlen auf den Empfänger geführt sind, und mit einer Auswerteeinheit, die ausgebildet ist in Abhängigkeit von Empfangssignalen des Empfängers ein Objektfeststellungssignal zu generieren. Der Sender emittiert Lichtstrahlen in Form von Pulsfolgen mit wenigstens zwei durch eine Pulspause getrennten Lichtpulsen. Die Auswerteeinheit ist ausgebildet, eine Pulsfolge dadurch zu erkennen, dass als Maß für den Pulsabstand zwischen Lichtpulsen der Abstand der fallenden Flanken der Lichtpulse und/oder der Abstand der steigenden Flanken der Lichtpulse erfasst wird. Es erfolgt eine Auswahl der Auswertung des Abstands der fallenden Flanken der Lichtpulse und/oder des Abstands der steigenden Flanken der Lichtpulse abhängig von den Signalstärken der Lichtpulse.

Die DE 10 2018 117 878 B4 betrifft ein Sicherheitslichtgitter zur Überwachung eines Schutzbereiches mit wenigstens zwei Sende-/Empfangsleisten, mit wenigstens einem Lichtsender und mit wenigstens einem Lichtempfänger, wobei die Sende-/Empfängerleisten einander gegenüberliegend angeordnet sind, und zwischen diesen durch die Lichtstrahlen der Lichtsender ein Schutzfeld gebildet ist. Jeweils wenigstens ein Lichtsender der einen Sende-/Empfangsleiste und wenigstens ein Lichtempfänger der anderen Sende-/Empfangsleiste bilden ein Sende-/Empfangspaar. Das Sicherheitslichtgitter umfasst weiterhin Mittel zur Synchronisation der Sende-/Empfangsleisten und eine Steuer- und Auswerteeinheit. Wenigstens einer der Lichtsender einer der Sende-/Empfangsleiste bildet mit wenigstens einem der Lichtempfänger derselben Sende-/Empfangsleiste einen Lichttaster. Der Lichttaster ist als Lichtlaufzeittaster ausgebildet, wobei die Steuer- und Auswerteeinheit ausgebildet ist, die Lichtlaufzeit empfangener Lichtsignale oder Lichtimpulse des Lichtempfängers auszuwerten. Der Lichtempfänger weist mindestens eine Einzelphotoenlawinendiode auf, wobei der Abstand der gegenüberliegenden Sender-/Empfangsleiste eingelernt und abgespeichert ist, und der gespeicherte Wert zyklisch mit aktuell erfassten Werten verglichen wird, wobei eine wechselseitige optische Kommunikation zwischen beiden Sende-/Empfangsleisten vorhanden ist.

Die US 5 218 196 A betrifft ein Lichtgitter mit einer Reihenanordnung von Lichtstrahlen emittierenden Sendern an einem Rand eines Überwachungsbereichs und mit einer Reihenanordnung von Lichtstrahlen empfangenden Empfängern am gegenüberliegenden Rand des Überwachungsbereichs. Das Lichtgitter ist so ausgerichtet, dass bei freiem Überwachungsbereich die Lichtstrahlen jeweils eines Senders auf einen zugeordneten Empfänger treffen. Dies wird bei einer Systemprüfung des Lichtgitters abgeprüft.

Die EP 3 822 666 A1 betrifft eine Lichtschrankenanordnung mit einer Sendereinheit und einer Empfängereinheit. Die Sendereinheit weist mehrere Lichtstrahlen emittierende Sender und die Empfängereinheit mehrere Sendelichtstrahlen empfangende Empfänger auf. Weiterhin weist die Lichtschrankenanordnung eine Ausrichteinheit zur Ausrichtung der Sendereinheit und Empfängereinheit auf. Die Ausrichteinheit weist eine Anordnung von Anzeigeelementen auf, die mittels einer Schiebekette gesteuert werden.

Der Erfindung liegt die Aufgabe zugrunde, eine einfache, sichere und kostengünstige Justagemöglichkeit für eine Lichtschrankenanordnung der eingangs genannten Art bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich gemäß Anspruch 1.

Die Erfindung betrifft weiterhin ein Verfahren zur Erfassung von Objekten in einem Überwachungsbereich gemäß Anspruch 25.

Bei der erfindungsgemäßen Lichtschrankenanordnung wird eine einfache und genaue Justage ermöglicht und zwar auch dann, wenn in einem Anfangszustand eine schlechte Ausrichtung der Komponenten der Lichtschrankenanordnung vorliegt.

Dies wird erfindungsgemäß dadurch erreicht, dass anhand der Empfangssignale der Empfänger zwei unterschiedliche Ausrichtzustände bestimmt werden, aus welchen dann die Ausrichtgüte als Maß für die aktuelle Ausrichtgüte ermittelt wird. Durch eine Visualisierung der Ausrichtgüte kann dann eine Bedienperson die aktuelle Ausrichtung der Lichtschrankenanordnung überprüfen und so eine genaue Justage der Lichtschrankenanordnung durchführen.

Die diversitären Ausrichtzustände liefern unterschiedliche Informationen über den aktuellen Zustand der Ausrichtung, so dass die aus diesen ermittelte Ausrichtgüte eine zuverlässige und genaue Information über die aktuelle Güte der Ausrichtung der Lichtschrankenanordnung liefert.

Anhand der vorteilhaft fortlaufend während eines Ausrichtbetriebs ermittelten und visualisierten Ausrichtgüte kann somit eine genaue Justage der Lichtschrankenanordnung erfolgen.

Gemäß einer ersten Ausgestaltung der Lichtschrankenanordnung ist diese eine Einweglichtschranke oder ein Lichtvorhang, wobei der oder die Sender an einem ersten Rand des Überwachungsbereichs und der oder die Empfänger am gegenüberliegenden Rand des Überwachungsbereichs angeordnet sind.

In diesem Fall sind der oder die Sender in einer Sendereinheit und der oder die Empfänger in einer hiervon separaten Empfängereinheit integriert.

Gemäß einer zweiten Ausgestaltung der Lichtschrankenanordnung ist diese eine Reflexionslichtschranke oder ein Reflexionslichtvorhang, wobei die Sender und Empfänger an einem Rand des Überwachungsbereichs angeordnet sind und am gegenüberliegenden Rand des Überwachungsbereichs wenigstens ein Reflektor angeordnet ist, so dass bei freiem Überwachungsbereich die Lichtstrahlen des oder der Sender über den Reflektor zum jeweils zugeordneten Empfänger geführt sind.

In diesem Fall sind die Sender und Empfänger in einer gemeinsamen Sender-/Empfängereinheit integriert.

Zweckmäßig ist eine Voraussetzung für einen Ausrichtzustand, dass wenigstens ein Empfänger ein Signal empfängt.

Damit wird gefordert, dass wenigstens die Lichtstrahlen eines Senders zumindest teilweise auf den zugeordneten Empfänger treffen. Dies definiert eine Mindestausrichtung der Lichtschrankenanordnung als Voraussetzung dafür, dass im Ausrichtbetrieb die Justage anhand ermittelter Ausrichtgüte gestartet werden kann.

Erfindungsgemäß werden zur Definition von Ausrichtzuständen die Signalstärken von an dem oder den Empfängern empfangenen Lichtstrahlen herangezogen.

Dabei ist die Signalstärke durch die Amplituden der Lichtstrahlen oder durch die Pulsbreiten von in Form von Lichtimpulsen emittierten Lichtstrahlen definiert.

Anhand der Signalstärken wird eine erste Kategorie von Ausrichtzuständen gebildet. Unterschiedliche Ausrichtzustände können sich durch unterschiedliche Signalstärken für die Empfänger der Lichtschrankenanordnung unterscheiden. Auch kann bei den Ausrichtzuständen eine Differenzierung dahingehend vorgenommen werden, wie viele und welche der Empfänger überhaupt Signale empfangen und welche nicht.

Insbesondere können die Ausrichtzustände auch ein Maß für die Signalqualität darstellen, indem das Verhältnis von emittierten und empfangenen Lichtstrahlen, insbesondere Lichtimpulsen, gebildet wird.

Für den Fall, dass die Sender und Empfänger in getrennten Einheiten, insbesondere Gehäusen integriert sind, muss dann zwischen diesen eine Datenverbindung existieren. Diese kann leitungsgebunden sein oder berührungslos, zum Beispiel optisch oder als Funkverbindung ausgebildet sein.

Weiterhin ist es möglich, dass zur Definition von Ausrichtzuständen aus den Pulsbreiten mehrerer oder aller Lichtstrahlen eine Summenpulsbreite bestimmt wird.

Die Summenpulsbreiten liefern eine integrierte Information über den Zustand der Ausrichtung.

Erfindungsgemäß ist die Lichtschrankenanordnung derart ausgebildet, dass den Lichtstrahlen Codes aufgeprägt sind, und dass Ausrichtzustände durch die Anzahl und/oder Vollständigkeit von empfangenen Codes definiert sind.

Die Codes liefern somit eine zweite Kategorie von Ausrichtzuständen.

Für einen Ausrichtzustand wird vorteilhaft ermittelt, ob ein gültiges Signal an wenigstens einem Empfänger registriert wird. Insbesondere liegt ein gültiges Signal vor, wenn ein empfangener Code einer vorgegebenen Erwartungshaltung entspricht.

Auch kann ein gültiges Signal vorliegen, wenn für wenigstens einen der Empfänger ein Signal mit einer vorgegebenen Mindest-Signalqualität vorliegt.

Vorteilhaft wird die Anzahl von gültigen Signalen einer Anzahl von Empfängern auf die Gesamtzahl der Empfänger normiert.

Weiter vorteilhaft wird aus den Signalstärken für die einzelnen Empfänger ein Maximalwert und ein Minimalwert bestimmt. Anhand dieser Extremwerte werden die Signalstärken normiert.

Durch die Normierung ist der ermittelte Wert für die Ausrichtgüte unabhängig von den Beträgen der Signalstärken.

Die Auswertung erfolgt erfindungsgemäß derart, dass in Abhängigkeit der Ausrichtzustände eine Ausrichtgüte ermittelt wird, wobei die einzelnen Ausrichtzustände Beiträge bilden, die zur Ausrichtgüte aufaddiert werden.

Dabei ist es insbesondere möglich, dass die Beiträge mit Gewichtungsfaktoren gewichtet werden.

Damit ist der Beitrag der einzelnen Ausrichtzustände einstellbar.

Weiterhin ist es möglich, dass durch unterschiedliche Gewichtungsfaktoren unterschiedliche Ausrichtgüten erhalten werden.

Beispielsweise kann eine erste Ausrichtgüte ein Maß für eine Grobausrichtung und eine zweite Ausrichtgüte ein Maß für eine Feinausrichtung der Lichtschrankenanordnung bilden.

Schließlich ist es möglich, dass jeweils mehrere Empfänger zu Ausrichtbereichen zusammengefasst sind, wobei für jeden Ausrichtbereich eine Ausrichtgüte ermittelt wird.

So kann beispielsweise bei einem Lichtvorhang eine erste Ausrichtgüte ein Maß für relative Ausrichtung der oberen Bereiche der Sendereinheit und Empfängereinheit darstellen und eine zweite Ausrichtgüte ein Maß für die relative Ausrichtung der unteren Bereiche der Sendereinheit und Empfängereinheit darstellen.

Entsprechend kann die Ausrichtgüte ein Maß für die Ausrichtung des oberen beziehungsweise unteren Bereichs der Sender-/Empfängereinheit relativ zu einem Reflektor bei einer Lichtschrankenanordnung in Form eines Reflexionslichtvorhangs darstellen.

Gemäß einer vorteilhaften Ausführungsform werden zur Bestimmung von Ausrichtzuständen die Empfangssignale der Empfänger mit Schwellwerten bewertet.

Dabei können diese Schwellwerte auch zusätzlich zur Erfassung der Objekte im Überwachungsbereich verwendet werden.

Besonders vorteilhaft werden die Schwellwerte fortlaufend zwischen einem Maximalwert und Minimalwert geändert.

Gleichwirkend hierzu ist es auch möglich, dass Verstärkungen der Empfangssignale fortlaufend zwischen einem Maximalwert und Minimalwert geändert werden.

Durch die kontinuierliche zyklische Variation der Höhen der Schwellwerte beziehungsweise der Verstärkungen der Empfangssignale wird zur Bestimmung von Ausrichtzuständen eine Vielzahl unterschiedlicher Schwellwertbewertungen der Signalstärken oder der empfangenen Codes durchgeführt, wodurch sich gegenüber einer festen Schwellwertbewertung bei gleichbleibender Verstärkung der Empfangssignale eine erheblich größere Anzahl von Informationen ergibt, was die Aussagekraft der Ausrichtzustände erheblich erhöht.

Vorteilhaft weist die Lichtschrankenanordnung Anzeigemittel zur Anzeige der oder jeder Ausrichtgüte auf.

Insbesondere sind dabei optische Anzeigemittel vorgesehen.

Die optischen Anzeigemittel können in Form einzelner Leuchtdioden, Leuchtdiodenreihen oder dergleichen ausgebildet sein.

Vorteilhaft erfolgt eine kontinuierliche, insbesondere auch richtungsabhängige Anzeige.

Werden für die Lichtschrankenanordnung mehrere Ausrichtgüten ermittelt, werden diese bevorzugt mit unterschiedlichen Anzeigemitteln angezeigt.

Prinzipiell ist es auch möglich, einzelne Ausrichtzustände anzuzeigen.

Bei einer Lichtschrankenanordnung in Form einer Einweglichtschranke oder eines Lichtvorhangs sind vorteilhaft an der Sendereinheit und/oder an der Empfängereinheit Anzeigemittel vorgesehen.

Bei einer Lichtschrankenanordnung in Form einer Reflexionslichtschranke oder eines Reflexionslichtvorhangs sind die Anzeigemittel vorteilhaft an der Sender-/Empfängereinheit vorgesehen.

Gemäß einer weiteren Ausführungsform sind Anzeigemittel an einer externen Einheit vorgesehen.

Die externe Einheit kann zum Beispiel von einem Personal Computer, Laptop oder einem Smartphone gebildet sein, wobei dann deren graphische Oberflächen die Anzeigemittel bilden.

Die Erfindung wird im Folgenden anhand der Zeichnungen erläutert. Es zeigen:
- Figur 1:: Ausführungsbeispiel der erfindungsgemäßen Lichtschrankenanordnung in Form eines Lichtvorhangs.
- Figur 2:: Ausführungsbeispiel für eine Ansteuerung der Empfänger des Lichtvorhangs gemäß Figur 1.
- Figur 3:: Beispiel einer Codierung von Lichtstrahlen des Lichtvorhangs gemäß Figur 1.
- Figur 4:: Beispiel für einen unvollständigen Empfang der Codes gemäß Figur 2.
- Figur 5:: Bewertung von Empfangssignalen des Lichtvorhangs gemäß Figur 1 mit einem zeitlich variierenden Schwellwert.
- Figur 6:: Darstellung von unterschiedlich verstärkten Empfangssignalen von Empfängern des Lichtvorhangs gemäß Figur 1.
- Figur 7:: Beispiel einer Signalauswertung von Empfangssignalen zur Bestimmung von Ausrichtzuständen.
- Figur 8:: Beispiel einer Schaltungsanordnung zur Bestimmung einer Ausrichtgüte.

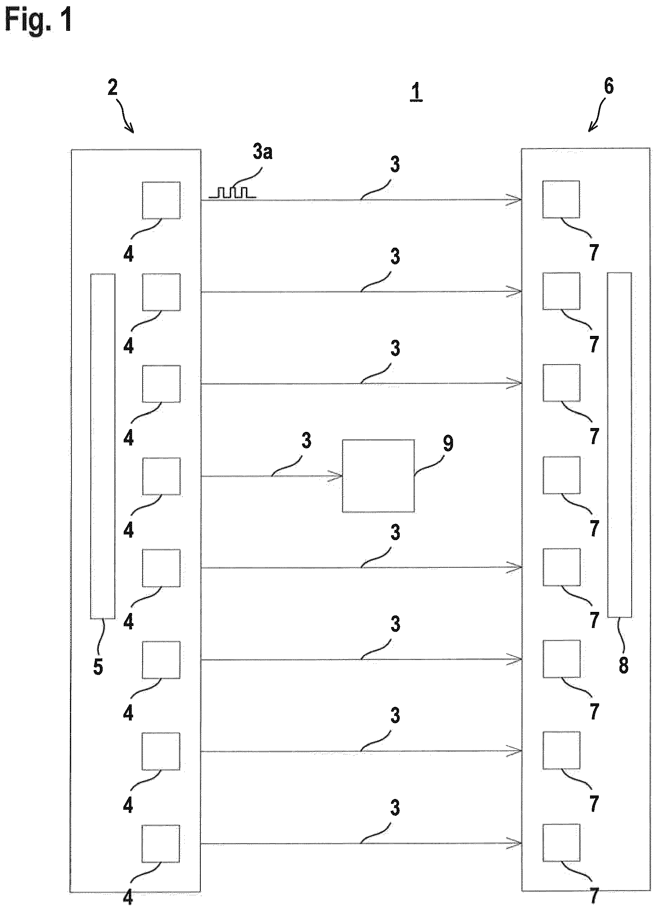

Figur 1 zeigt schematisch ein Ausführungsbeispiel der erfindungsgemäßen Lichtschrankenanordnung in Form eines Lichtvorhangs 1.

Der Lichtvorhang 1 dient zur Objekterfassung in einem Überwachungsbereich. Der Lichtvorhang 1 weist eine Sendereinheit 2 mit einem Gehäuse auf, in welchem eine Reihenanordnung von Lichtstrahlen 3 emittierenden Sendern 4 vorgesehen ist. Die Sender 4, die von Leuchtdioden oder dergleichen gebildet sind, emittieren Lichtstrahlen 3 in Form von Lichtimpulsen 3a im Infrarotbereich, wie für den ersten Sender 4 in Figur 1 schematisch dargestellt. Die Sender 4 werden von einer Sendersteuerung 5 gesteuert. Die Sendersteuerung 5 adressiert die einzelnen Sender 4 und steuert diese so an, dass diese einzelne Lichtimpulse 3a emittieren.

Der Lichtvorhang 1 weist weiterhin eine Empfängereinheit 6 auf, in deren Gehäuse eine Reihenanordnung von Empfängern 7 in Form von Fotodioden oder dergleichen sowie eine Auswerteeinheit 8 integriert ist. Die Auswerteeinheit 8 dient auch zur Ansteuerung der Empfänger 7. Die Ansteuerung umfasst eine Adressierung und selektive Auswertung der Empfangssignale der einzelnen Empfänger 7.

Die Sendereinheit 2 und die Empfängereinheit 6 sind an gegenüberliegenden Rändern des Überwachungsbereichs so angeordnet, dass bei freiem Überwachungsbereich die Lichtstrahlen 3 eines Senders 4 auf den zugeordneten gegenüberliegenden Empfänger 7 treffen, wie in Figur 1 dargestellt. Jeder Sender 4 bildet mit dem zugeordneten Empfänger 7 ein Sender-Empfänger-Paar.

Die Sender-Empfänger-Paare werden in bekannter Weise über eine optische Synchronisierung zyklisch einzeln nacheinander aktiviert. Im vorliegenden Fall sind acht Strahlachsen bildende Sender-Empfänger-Paare vorgesehen. Natürlich kann ein Lichtvorhang 1 auch eine andere Anzahl von Sender-Empfänger-Paaren aufweisen.

Objekte 9 im Überwachungsbereich werden dadurch erfasst, dass der Strahlengang der Lichtstrahlen 3 wenigstens eines Sender-Empfänger-Paars unterbrochen wird, wie in Figur 1 dargestellt.

In der Auswerteeinheit 8 wird in Abhängigkeit der Empfangssignale ein Objektfeststellungssignal generiert, das über einen Ausgang an eine externe Einheit ausgegeben wird. Im vorliegenden Fall ist das Objektfeststellungssignal als binäres Schaltsignal generiert, dessen Schaltzustände angeben, ob sich ein Objekt 9 im Überwachungsbereich befindet oder nicht.

Der Lichtvorhang 1 oder allgemein die Lichtschrankenanordnung kann als Sicherheitssensor ausgebildet sein, der im Bereich der Sicherheitstechnik, insbesondere im Bereich des Personenschutzes, eingesetzt werden kann. Hierzu weist der Sicherheitssensor einen fehlersicheren Aufbau auf. Dies kann durch eine redundante, insbesondere zweikanalige Auswerteeinheit 8 realisiert werden.

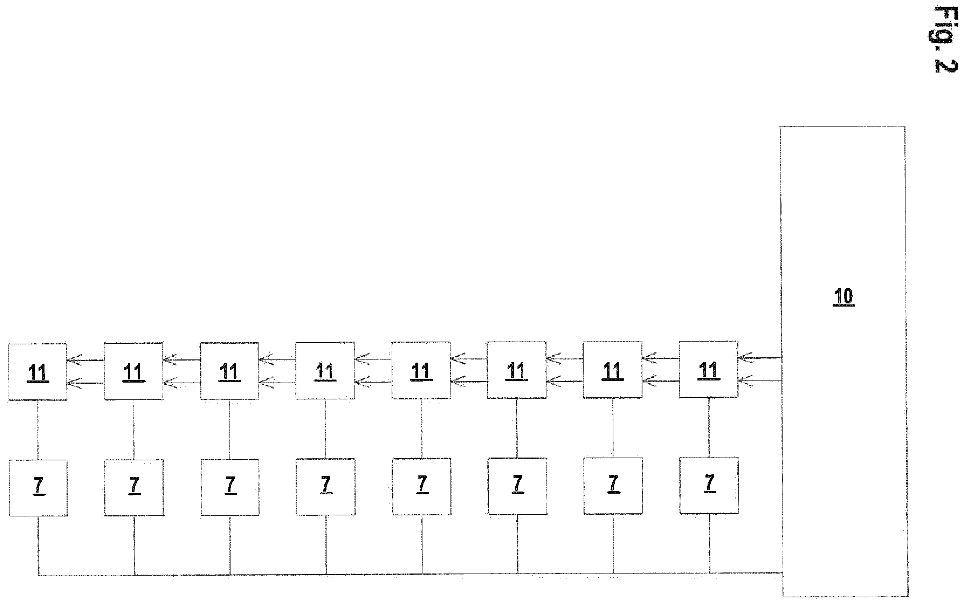

Figur 2 zeigt eine Schaltungsanordnung zur Ansteuerung der Empfänger 7. Ein Controller 10 als Bestandteil der Auswerteeinheit 8 steuert Schiebekettenelemente 11 an, die eine Schiebekette bilden. Die Schiebekettenelemente 11, die jeweils mit einem Empfänger 7 verbunden sind, sind von Flip-Flops gebildet. Durch die serielle Ansteuerung der Schiebekettenelemente 11 werden die Empfänger 7 einzeln nacheinander aktiviert.

Eine entsprechende Schaltungsanordnung ist in der Sendersteuerung 5 zur Ansteuerung der Sender 4 vorgesehen.

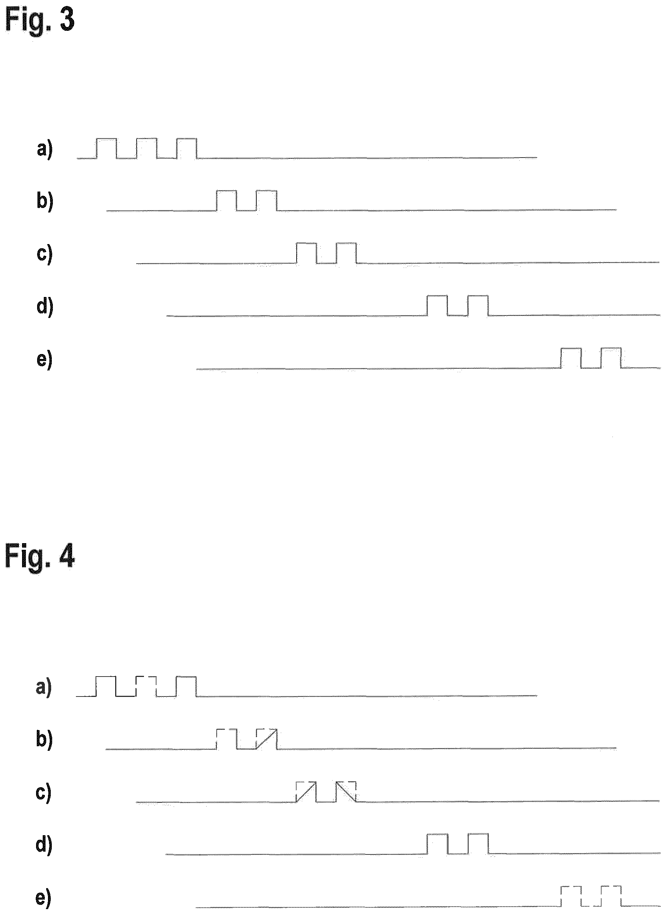

Die Figuren 3 bis 6 zeigen Signalverläufe von Lichtimpulsen 3a, die von Sendern 4 des Lichtvorhangs 1 gesendet beziehungsweise von Empfängern 7 des Lichtvorhangs 1 empfangen werden. Dabei sind jeweils nur Signalverläufe von fünft der Strahlachsen des Lichtvorhangs 1 dargestellt.

Figur 3 zeigt die Aussendung von Lichtimpulsen 3a von Sendern 4 des Lichtvorhangs 1 gemäß Figur 1 innerhalb eines Sendezyklus. Der Sendezyklus wiederholt sich periodisch.

Der Sender 4 der ersten Strahlachse (in Figur 3 mit a bezeichnet) emittiert eine Folge von drei Lichtimpulsen 3a, die einen ersten Code bilden. Die Sender 4 aller weiteren Strahlachsen (in Figur 3 mit b - e bezeichnet) emittieren jeweils eine Folge von zwei Lichtimpulsen 3a, die einen zweiten Code bilden. Da sich der Code der ersten Strahlachse von dem Code aller weiteren Strahlachsen unterscheidet, wird die erste Strahlachse zur optischen Synchronisierung der Sender-Empfänger-Paare des Lichtvorhangs 1 verwendet.

In einem Ausrichtbetrieb erfolgt eine Justage des Lichtvorhangs 1. Erfindungsgemäß werden hierzu in der Auswerteeinheit 8 abhängig von Empfangssignalen der Empfänger 7 wenigstens zwei unterschiedliche Ausrichtzustände ermittelt und abhängig hiervon eine Ausrichtgüte ermittelt.

Einerseits werden zur Definition von Ausrichtzuständen die Signalstärken von auf dem oder den Empfängern 7 empfangenen Lichtstrahlen 3 herangezogen. Dabei ist die Signalstärke durch die Amplituden der Lichtstrahlen 3 oder durch die Pulsbreiten von in Form von Lichtimpulsen 3a emittierten Lichtstrahlen 3 definiert.

Andererseits sind Ausrichtzustände durch die Anzahl und/oder Vollständigkeit von empfangenen Codes definiert.

In Abhängigkeit von den Ausrichtzständen wird eine Ausrichtgüte ermittelt, wobei die einzelnen Ausrichtzustände Beiträge bilden, die zur Ausrichtgüte aufaddiert werden.

Die Lichtschrankenanordnung weist Anzeigemittel zur Anzeige der oder jeder Ausrichtgüte auf.

Die Anzeigemittel sind als optische Anzeigemittel ausgebildet, die an der Außenseite der Sendereinheit 2 und/oder der Empfängereinheit 6 sichtbar angebracht sind.

Alternativ oder zusätzlich sind Anzeigemittel an einer externen Einheit vorgesehen.

Figur 4 zeigt die an den Empfängern 7 der Strahlachsen a - e empfangenen Lichtimpulse 3a. Wie aus Figur 4 ersichtlich, werden die Lichtimpulse 3a unvollständig empfangen, das heißt es werden nur Code-Fragmente registriert.

Je nachdem wie vollständig die Codes empfangen werden, ergibt sich ein unterschiedlicher Ausrichtzustand.

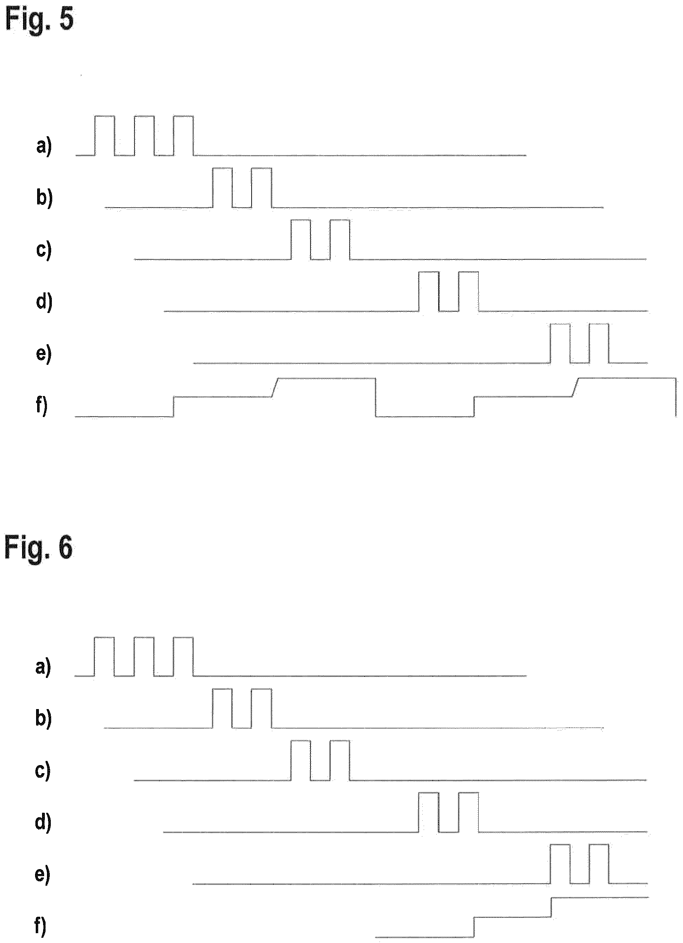

Zur Bewertung der empfangenen Codes werden diese mit einem Schwellwert bewertet. Um mehr Informationen über die Codes zu erhalten, variiert die Höhe des Schwellwerts zyklisch. Dies ist in Figur 5 dargestellt. Dort sind mit a - e die für die Strahlachsen empfangenen Lichtimpulse 3a dargestellt. Mit f ist der zeitlich variierte Schwellwert bezeichnet.

Alternativ kann ein unveränderlicher Schwellwert vorgesehen werden. Dann können die Sendeleistungen der Sender 4 zyklisch variiert oder die Verstärkungen der Empfangssignale der Empfänger 7 zyklisch variiert werden, wie in Figur 6 veranschaulicht.

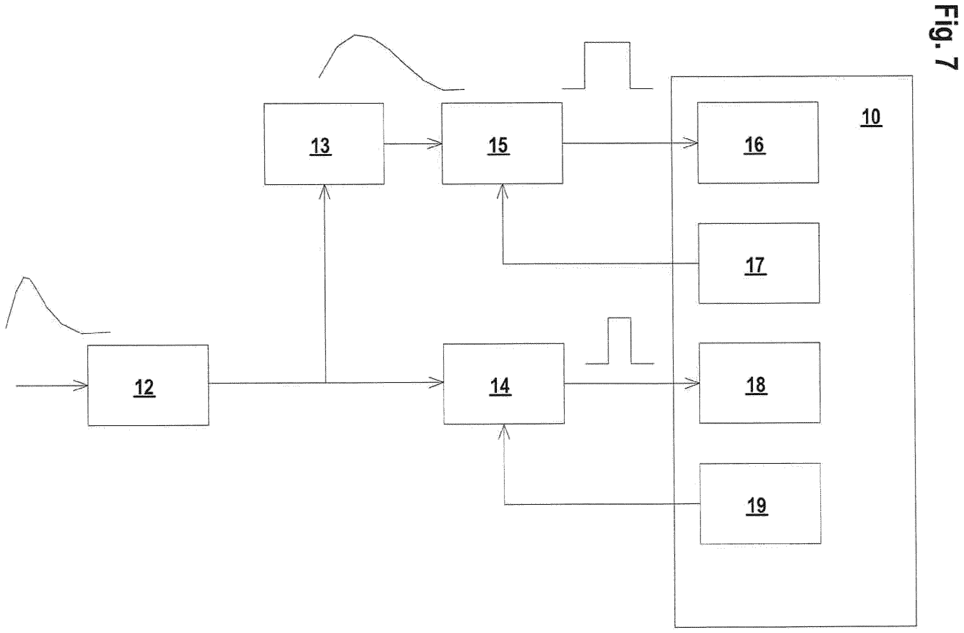

Figur 7 zeigt eine Schaltungsanordnung zur Bestimmung von Ausrichtzuständen.

Ein empfangener Lichtimpuls 3a wird in einem Verstärker 12 verstärkt. Das im Verstärker 12 verstärkte Empfangssignal wird einem Tiefpass 13 und einem Komparator 14 zur Digitalisierung des Lichtimpulses 3a zugeführt.

Das Ausgangssignal des Tiefpasses 13 wird einem Komparator 15 zur Digitalisierung des tiefpassgebildeten Lichtimpulses 3a zugeführt. Das Ausgangssignal dieses Komparators 15 wird über einen Digitaleingang 16 in den Controller 10 eingelesen. Über einen Digital-Analog-Wandler 17 kann der Schwellwert des Komparators 15 eingestellt werden.

Das Ausgangssignal des Komparators 14 wird über einen Digitaleingang 18 in den Controller 10 eingelesen. Über einen Digital-Analog-Wandler 19 kann der Schwellwert für den Komparator 14 eingestellt werden.

Das digitalisierte, tiefenpassgebildete Signal am Digitaleingang 16 dient zur Pulsbreitenmessung des Lichtimpulses 3a und damit zur Bestimmung der signalstärke des Lichtimpulses 3a.

Das Signal am Digitaleingang 18 kann zur Dekodierung von empfangenen Codes oder auch zur Pulsbreitenmessung verwendet werden.

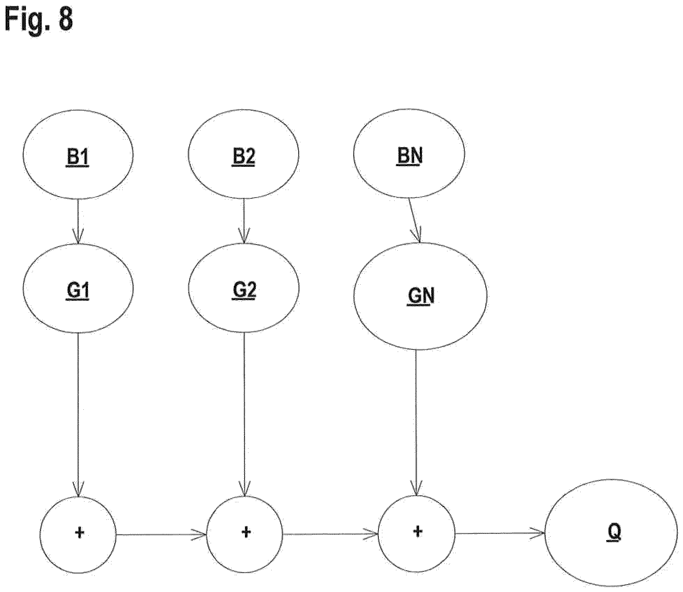

Figur 8 zeigt schematisch eine Schaltungsanordnung zur Bestimmung der Ausrichtgüte Q abhängig von einzelnen Beiträgen B1, B2, BN, die durch unterschiedliche Ausrichtzustände bestimmt werden. Jeder Beitrag B1, B2, BN wird mit einem Gewichtungsfaktor G1, G2, GN multipliziert. Die Ergebnisse werden aufaddiert und ergeben die Ausrichtgüte Q.

Die Gewichtungsfaktoren können abhängig von den Ausrichtzuständen variiert werden, insbesondere durch Umschaltvorgänge.

### Bezugszeichenliste

- (1): Lichtvorhang
- (2): Sendereinheit
- (3): Lichtstrahl
- (3a): Lichtimpuls
- (4): Sender
- (5): Sendersteuerung
- (6): Empfängereinheit
- (7): Empfänger
- (8): Auswerteeinheit
- (9): Objekt
- (10): Controller
- (11): Schiebekettenelement
- (12): Verstärker
- (13): Tiefpass
- (14): Komparator
- (15): Komparator
- (16): Digitaleingang
- (17): Digital-Analog-Wandler
- (18): Digitaleingang
- (19): Digital-Analog-Wandler

## Patentansprüche

1. Lichtschrankenanordnung zur Erfassung von Objekten (9) in einem Überwachungsbereich, mit wenigstens einem Empfänger (7), wobei bei freiem Überwachungsbereich die Lichtstrahlen (3) des Senders (4) zum Empfänger (7) geführt sind und bei einem Objekteingriff in den Überwachungsbereich der Strahlengang der Lichtstrahlen (3) zumindest teilweise unterbrochen ist, und mit einer Auswerteeinheit (8), in welcher abhängig von Empfangssignalen des Empfängers (7) ein Objektfeststellungssignal generiert wird, wobei in der Auswerteeinheit (8) abhängig von Empfangssignalen des Empfängers (7) zumindest zwei unterschiedliche Ausrichtzustände ermittelt werden, wobei wenigstens einer der zumindest zwei unterschiedlichen Ausrichtzustände einer ersten Kategorie angehört, wobei die erste Kategorie durch die Heranziehung der Signalstärken von an dem oder den Empfängern (7) empfangenen Lichtstrahlen (3) definiert ist, und wobei wenigstens einer der zumindest zwei unterschiedlichen Ausrichtzustände einer zweiten Kategorie angehört, wobei die zweite Kategorie durch die Anzahl und/oder Vollständigkeit von empfangenen Codes definiert ist, und wobei in Abhängigkeit der Ausrichtzustände eine Ausrichtgüte ermittelt wird, **dadurch gekennzeichnet, dass** die einzelnen Ausrichtzustände Beiträge bilden, die zur Ausrichtgüte aufaddiert werden.

2. Lichtschrankenanordnung nach Anspruch 1, **dadurch gekennzeichnet, dass** diese eine Einweglichtschranke oder ein Lichtvorhang (1) ist, wobei der oder die Sender (4) an einem ersten Rand des Überwachungsbereichs und der oder die Empfänger (7) am gegenüberliegenden Rand des Überwachungsbereichs angeordnet sind.

3. Lichtschrankenanordnung nach Anspruch 1, **dadurch gekennzeichnet, dass** diese eine Reflexionslichtschranke oder ein Reflexionslichtvorhang ist, wobei die Sender (4) und Empfänger (7) an einem Rand des Überwachungsbereichs angeordnet sind und am gegenüberliegenden Rand des Überwachungsbereichs wenigstens ein Reflektor angeordnet ist, so dass bei freiem Überwachungsbereich die Lichtstrahlen (3) des oder der Sender (4) über den Reflektor zum jeweils zugeordneten Empfänger (7) geführt sind.

4. Lichtschrankenanordnung nach einem der Ansprüche 1 bis 3, **dadurch gekennzeichnet, dass** eine Voraussetzung für einen Ausrichtzustand ist, dass wenigstens ein Empfänger (7) ein Signal empfängt.

5. Lichtschrankenanordnung nach einem der Ansprüche 1 bis 4, **dadurch gekennzeichnet, dass** die Signalstärke durch die Amplituden der Lichtstrahlen (3) oder durch die Pulsbreiten von in Form von Lichtimpulsen (32) emittierten Lichtstrahlen (3) definiert ist.

6. Lichtschrankenanordnung nach Anspruch 5, **dadurch gekennzeichnet, dass** zur Definition von Ausrichtzuständen aus den Pulsbreiten mehrerer oder aller Lichtstrahlen (3) eine Summenpulsbreite bestimmt wird.

7. Lichtschrankenanordnung nach einem der Ansprüche 1 bis 6, **dadurch gekennzeichnet, dass** zur Ermittlung eines Ausrichtzustands ermittelt wird, ob für empfangene Lichtstrahlen (3) ein gültiges Signal vorliegt.

8. Lichtschrankenanordnung nach einem der Ansprüche 6 und 7, **dadurch gekennzeichnet, dass** ein gültiges Signal vorliegt, wenn ein empfangener Code einer vorgegebenen Erwartungshaltung entspricht.

9. Lichtschrankenanordnung nach einem der Ansprüche 7 oder 8, **dadurch gekennzeichnet, dass** die Anzahl von gültigen Signalen einer Anzahl von Empfängern (7) auf die Gesamtzahl der Empfänger (7) eines Ausrichtbereiches normiert wird.

10. Lichtschrankenanordnung nach einem der Ansprüche 5 bis 9, **dadurch gekennzeichnet, dass** aus den Signalstärken für die einzelnen Empfänger (7) ein Maximalwert und ein Minimalwert bestimmt wird, und dass anhand dieser Extremwerte die Signalstärken normiert werden.

11. Lichtschrankenanordnung nach Anspruch 10, **dadurch gekennzeichnet, dass** die Beiträge mit Gewichtungsfaktoren gewichtet werden.

12. Lichtschrankenanordnung nach Anspruch 11, **dadurch gekennzeichnet, dass** durch unterschiedliche Gewichtungsfaktoren unterschiedliche Ausrichtgüten erhalten werden.

13. Lichtschrankenanordnung nach einem der Ansprüche 1 bis 12, **dadurch gekennzeichnet, dass** jeweils mehrere Empfänger (7) zu Ausrichtbereichen zusammengefasst sind, wobei für jeden Ausrichtbereich eine Ausrichtgüte ermittelt wird.

14. Lichtschrankenanordnung nach Anspruch 13, **dadurch gekennzeichnet, dass** zur Ermittlung der Ausrichtgüte eines Bereichs das Empfangssignal des Empfängers (7) mit der geringsten Signalstärke herangezogen wird.

15. Lichtschrankenanordnung nach einem der Ansprüche 1 bis 14, **dadurch gekennzeichnet, dass** zur Bestimmung von Ausrichtzuständen die Empfangssignale der Empfänger (7) mit Schwellwerten bewertet werden.

16. Lichtschrankenanordnung nach Anspruch 15, **dadurch gekennzeichnet, dass** die Schwellwerte fortlaufend zwischen einem Maximalwert und Minimalwert geändert werden.

17. Lichtschrankenanordnung nach Anspruch 15, **dadurch gekennzeichnet, dass** Verstärkungen der Empfangssignale fortlaufend zwischen einem Maximalwert und Minimalwert geändert werden.

18. Lichtschrankenanordnung nach einem der Ansprüche 1 bis 17, **dadurch gekennzeichnet, dass** diese Anzeigemittel zur Anzeige der oder jeder Ausrichtgüte aufweist.

19. Lichtschrankenanordnung nach Anspruch 18, **dadurch gekennzeichnet, dass** optische Anzeigemittel vorgesehen sind.

20. Lichtschrankenanordnung nach einem der Ansprüche 18 oder 19, **dadurch gekennzeichnet, dass** Anzeigemittel an einer externen Einheit vorgesehen sind.

21. Lichtschrankenanordnung nach einem der Ansprüche 1 bis 20, **dadurch gekennzeichnet, dass** diese in einen Ausrichtbetrieb versetzbar ist, in welchem anhand der Ausrichtgüte ein Justagevorgang durchführbar ist.

22. Lichtschrankenanordnung nach einem der Ansprüche 1 bis 21, **dadurch gekennzeichnet, dass** eine Adressierung der Sender (4) oder Empfänger (7) jeweils mittels einer Schiebekette erfolgt.

23. Lichtschrankenanordnung nach Anspruch 22, **dadurch gekennzeichnet, dass** die Adressierung der Sender (4) oder Empfänger (7) entsprechend ihrer physikalischen Anordnung nacheinander erfolgt, oder dass die Adressierung der Sender (4) oder Empfänger (7) nach einem vorgegebenen Schema frei wählbar ist.

24. Lichtschrankenanordnung nach einem der Ansprüche 1 bis 23, **dadurch gekennzeichnet, dass** diese einen Sicherheitssensor bildet.

25. Verfahren zur Erfassung von Objekten (9) in einem Überwachungsbereich mittels einer Lichtschrankenanordnung, mit wenigstens einem Empfänger (7), wobei bei freiem Überwachungsbereich die Lichtstrahlen (3) des Senders (4) zum Empfänger (7) geführt sind und bei einem Objekteingriff in den Überwachungsbereich der Strahlengang der Lichtstrahlen (3) zumindest teilweise unterbrochen ist, und mit einer Auswerteeinheit (8), in welcher abhängig von Empfangssignalen des Empfängers (7) ein Objektfeststellungssignal generiert wird, wobei in der Auswerteeinheit (8) abhängig von Empfangssignalen des Empfängers (7) zumindest zwei unterschiedliche Ausrichtzustände ermittelt werden, wobei wenigstens einer der zumindest zwei unterschiedlichen Ausrichtzustände einer ersten Kategorie angehört, wobei die erste Kategorie durch die Heranziehung der Signalstärken von an dem oder den Empfängern (7) empfangenen Lichtstrahlen (3) definiert ist, und wobei wenigstens einer der zumindest zwei unterschiedliche Ausrichtzustände einer zweiten Kategorie angehört, wobei die zweite Kategorie durch die Anzahl und/oder Vollständigkeit von empfangenen Codes definiert ist, und wobei in Abhängigkeit der Ausrichtzustände eine Ausrichtgüte ermittelt wird, **dadurch gekennzeichnet, dass** die einzelnen Ausrichtzustände Beiträge bilden, die zur Ausrichtgüte aufaddiert werden.

## Claims

1. A light barrier assembly for detecting objects (9) in a surveillance area, having at least one receiver (7), the light beams (3) of the transmitter (4) being guided to the receiver (7) when the surveillance area is free, and the beam path of the light beams (3) being at least partially interrupted when an object enters the surveillance area, and having an evaluation unit (8) in which an object detection signal is generated as a function of received signals of the receiver (7), at least two different alignment states being determined in the evaluation unit (8) as a function of received signals of the receiver (7), wherein at least one of said at least two different alignment states belongs to a first category, wherein the first category is defined by using the signal strengths of light beams (3) received at the receiver or receivers (7), and wherein at least one of said at least two different alignment states belongs to a second category, wherein the second category is defined by the number and/or completeness of received codes, and wherein an alignment quality is determined as a function of the alignment states, **characterised in that** the individual alignment states form contributions which are added up to the alignment quality.

2. A light barrier assembly according to claim 1, **characterised in that** it is a one-way light barrier or a light curtain (1), wherein the transmitter or transmitters (4) are arranged at a first edge of the monitoring region and the receiver or receivers (7) are arranged at the opposite edge of the monitoring region.

3. A light barrier assembly according to claim 1, **characterised in that** this is a reflection light barrier or a reflection light curtain, wherein the transmitter (4) and receiver (7) are arranged at one edge of the monitoring region and at least one reflector is arranged at the opposite edge of the monitoring region, so that when the monitoring region is free the light beams (3) of the transmitter or transmitters (4) are guided via the reflector to the respectively associated receiver (7).

4. A light barrier assembly according to one of claims 1 to 3, **characterised in that** a prerequisite for an alignment state is that at least one receiver (7) receives a signal.

5. A light barrier assembly according to one of claims 1 to 4, **characterised in that** the signal strength is defined by the amplitudes of the light beams (3) or by the pulse widths of light beams (3) emitted in the form of light pulses (32).

6. A light barrier assembly according to claim 5, **characterised in that** a sum pulse width is determined from the pulse widths of several or all light beams (3) in order to define alignment states.

7. A light barrier assembly according to one of claims 1 to 6, **characterised in that**, in order to determine an alignment state, it is determined whether a valid signal is present for received light beams (3).

8. A light barrier assembly according to one of claims 6 and 7, **characterised in that** a valid signal is present if a received code corresponds to a predetermined expectation.

9. A light barrier assembly according to one of claims 7 or 8, **characterised in that** the number of valid signals of a number of receivers (7) is normalised to the total number of receivers (7) of an alignment range.

10. A light barrier assembly according to one of claims 5 to 9, **characterised in that** a maximum value and a minimum value are determined from the signal strengths for the individual receivers (7), and **in that** the signal strengths are standardised on the basis of these extreme values.

11. A light barrier assembly according to claim 10, **characterised in that** the contributions are weighted with weighting factors.

12. A light barrier assembly according to claim 11, **characterised in that** different alignment qualities are obtained by different weighting factors.

13. A light barrier assembly according to one of claims 1 to 12, **characterised in that** in each case a plurality of receivers (7) are combined to form alignment areas, an alignment quality being determined for each alignment area.

14. A light barrier assembly according to claim 13, **characterised in that** the received signal of the receiver (7) with the lowest signal strength is used to determine the alignment quality of a range.

15. A light barrier assembly according to one of claims 1 to 14, **characterised in that** the receiver signals of the receivers (7) are evaluated with threshold values to determine alignment states.

16. A light barrier assembly according to claim 15, **characterised in that** the threshold values are continuously changed between a maximum value and a minimum value.

17. A light barrier assembly according to claim 15, **characterised in that** amplifications of the received signals are continuously changed between a maximum value and a minimum value.

18. A light barrier assembly according to any one of claims 1 to 17, **characterised in that** it comprises indicating means for indicating the or each alignment quality.

19. A light barrier assembly according to claim 18, **characterised in that** optical display means are provided.

20. A light barrier assembly according to any one of claims 18 or 19, **characterised in that** indicating means are provided on an external unit.

21. A light barrier assembly according to one of claims 1 to 20, **characterised in that** the light barrier assembly can be set to an alignment mode in which an adjustment process can be carried out on the basis of the alignment quality.

22. A light barrier assembly according to one of claims 1 to 21, **characterised in that** the transmitters (4) or receivers (7) are each addressed by means of a sliding chain.

23. A light barrier assembly according to claim 22, **characterised in that** the addressing of the transmitters (4) or receivers (7) takes place in succession according to their physical assembly, or **in that** the addressing of the transmitters (4) or receivers (7) is freely selectable according to a predetermined scheme.

24. A light barrier assembly according to one of claims 1 to 23, **characterised in that** it forms a safety sensor.

25. A method for detecting objects (9) in a surveillance area by means of a light barrier assembly, having at least one receiver (7), the light beams (3) of the transmitter (4) being guided to the receiver (7) when the surveillance area is free and the beam path of the light beams (3) being at least partially interrupted when an object intervenes in the surveillance area, and having an evaluation unit (8) in which an object detection signal is generated as a function of received signals from the receiver (7), at least two different alignment states being determined in the evaluation unit (8) as a function of received signals from the receiver (7), wherein at least one of said at least two different alignment states belongs to a first category, wherein the first category is defined by the reference to the signal strengths of light beams (3) received at the receiver or receivers (7), and wherein at least one of said at least two different alignment states belongs to a second category, the second category being defined by the number and/or completeness of received codes, and an alignment quality being determined as a function of the alignment states, **characterised in that** the individual alignment states form contributions which are added up to the alignment quality.

## Revendications

1. Agencement de barrière lumineuse pour la détection d'objets (9) dans une zone de surveillance, comportant au moins un récepteur (7), les faisceaux lumineux (3) de l'émetteur (4) étant guidés vers le récepteur (7) lorsque la zone de surveillance est libre, et le trajet des faisceaux lumineux (3) étant au moins partiellement interrompu lorsqu'un objet pénètre dans la zone de surveillance, et ayant une unité d'évaluation (8) dans laquelle un signal de détection d'objet est généré en fonction des signaux reçus du récepteur (7), au moins deux états d'alignement différents étant déterminés dans l'unité d'évaluation (8) en fonction des signaux reçus du récepteur (7), dans lequel au moins un des deux états d'alignement différents appartient à une première catégorie, la première catégorie étant définie à l'aide de l'intensité des signaux des faisceaux lumineux (3) reçus par le ou les récepteurs (7), et dans lequel au moins un des deux états d'alignement différents appartient à une seconde catégorie, la seconde catégorie étant définie par le nombre et/ou l'exhaustivité des codes reçus, et dans lequel une qualité d'alignement est déterminée en fonction des états d'alignement, **caractérisée par le fait que** les différents états d'alignement forment des contributions qui s'additionnent pour former la qualité d'alignement.

2. Agencement de barrière lumineuse selon la revendication 1, **caractérisé en ce qu'**il s'agit d'une barrière lumineuse unidirectionnelle ou d'un rideau lumineux (1), dans lequel l'émetteur ou les émetteurs (4) sont disposés sur un premier bord de la zone de surveillance et le récepteur ou les récepteurs (7) sont disposés sur le bord opposé de la zone de surveillance.

3. Agencement de barrière lumineuse selon la revendication 1, **caractérisé par le fait qu'**il s'agit d'une barrière lumineuse à réflexion ou d'un rideau lumineux à réflexion, dans laquelle l'émetteur (4) et le récepteur (7) sont disposés sur un bord de la zone de surveillance et au moins un réflecteur est disposé sur le bord opposé de la zone de surveillance, de sorte que lorsque la zone de surveillance est libre, les faisceaux lumineux (3) de l'émetteur ou des émetteurs (4) sont guidés par le réflecteur jusqu'au récepteur (7) associé respectivement.

4. Agencement de barrière lumineuse selon l'une des revendications 1 à 3, **caractérisé par le fait qu'**un état d'alignement est conditionné par la réception d'un signal par au moins un récepteur (7).

5. Agencement de barrière lumineuse selon l'une des revendications 1 à 4, **caractérisé par le fait que** l'intensité du signal est définie par les amplitudes des faisceaux lumineux (3) ou par les largeurs d'impulsion des faisceaux lumineux (3) émis sous forme d'impulsions lumineuses (32).

6. Agencement de barrière lumineuse selon la revendication 5, **caractérisé par le fait qu'**une largeur d'impulsion totale est déterminée à partir des largeurs d'impulsion de plusieurs ou de tous les faisceaux lumineux (3) afin de définir les états d'alignement.

7. Agencement de barrière lumineuse selon l'une des revendications 1 à 6, **caractérisé par le fait que**, pour déterminer un état d'alignement, on détermine si un signal valide est présent pour les faisceaux lumineux reçus (3).

8. Agencement de barrière lumineuse selon l'une des revendications 6 et 7, **caractérisé par le fait qu'**un signal valide est présent si un code reçu correspond à une attente prédéterminée.

9. Agencement de barrière lumineuse selon l'une des revendications 7 ou 8, **caractérisé par le fait que** le nombre de signaux valides d'un certain nombre de récepteurs (7) est normalisé par rapport au nombre total de récepteurs (7) d'une plage d'alignement.

10. Agencement de barrière lumineuse selon l'une des revendications 5 à 9, **caractérisé par le fait qu'**une valeur maximale et une valeur minimale sont déterminées à partir des intensités des signaux pour les récepteurs individuels (7), et que les intensités des signaux sont normalisées sur la base de ces valeurs extrêmes.

11. Agencement de barrière lumineuse selon la revendication 10, **caractérisé par le fait que** les contributions sont pondérées par des facteurs de pondération.

12. Agencement de barrière lumineuse selon la revendication 11, **caractérisé par le fait que** différentes qualités d'alignement sont obtenues par différents facteurs de pondération.

13. Agencement de barrière lumineuse selon l'une des revendications 1 à 12, **caractérisé par le fait que**, dans chaque cas, plusieurs récepteurs (7) sont combinés pour former des zones d'alignement, une qualité d'alignement étant déterminée pour chaque zone d'alignement.

14. Agencement de barrière lumineuse selon la revendication 13, **caractérisé par le fait que** le signal reçu du récepteur (7) ayant l'intensité de signal la plus faible est utilisé pour déterminer la qualité d'alignement d'une zone.

15. Agencement de barrière lumineuse selon l'une des revendications 1 à 14, **caractérisé par le fait que** les signaux des récepteurs (7) sont évalués à l'aide de valeurs seuils pour déterminer les états d'alignement.

16. Agencement de barrière lumineuse selon la revendication 15, **caractérisé par le fait que** les valeurs seuils sont continuellement modifiées entre une valeur maximale et une valeur minimale.

17. Agencement de barrière lumineuse selon la revendication 15, **caractérisé par le fait que** les amplifications des signaux reçus sont continuellement modifiées entre une valeur maximale et une valeur minimale.

18. Agencement de barrière lumineuse selon l'une des revendications 1 à 17, **caractérisé en ce qu'**elle comprend des moyens d'indication pour indiquer la ou chaque qualité d'alignement.

19. Agencement de barrière lumineuse selon la revendication 18, **caractérisé en ce qu'**elle comprend des moyens d'affichage optique.

20. Agencement de barrière lumineuse selon l'une des revendications 18 ou 19, **caractérisé par le fait que** les moyens d'indication sont situés sur une unité externe.

21. Agencement de barrière lumineuse selon l'une des revendications 1 à 20, **caractérisé par le fait que** la barrière lumineuse peut être réglée sur un mode d'alignement dans lequel un processus de réglage peut être effectué sur la base de la qualité de l'alignement.

22. Agencement de barrière lumineuse selon l'une des revendications 1 à 21, **caractérisé par le fait que** les émetteurs (4) ou les récepteurs (7) sont adressés au moyen d'une chaîne coulissante.

23. Agencement de barrière lumineuse selon la revendication 22, **caractérisé en ce que** l'adressage des émetteurs (4) ou des récepteurs (7) se fait successivement en fonction de leur assemblage physique, ou **en ce que** l'adressage des émetteurs (4) ou des récepteurs (7) est librement sélectionnable selon un schéma prédéterminé.

24. Agencement de barrière lumineuse selon l'une des revendications 1 à 23, **caractérisé en ce qu'**il constitue un capteur de sécurité.

25. Procédé de détection d'objets (9) dans une zone de surveillance au moyen d'une barrière lumineuse, comportant au moins un récepteur (7), les faisceaux lumineux (3) de l'émetteur (4) étant guidés vers le récepteur (7) lorsque la zone de surveillance est libre et le trajet des faisceaux lumineux (3) étant au moins partiellement interrompu lorsqu'un objet intervient dans la zone de surveillance, et ayant une unité d'évaluation (8) dans laquelle un signal de détection d'objet est généré en fonction des signaux reçus du récepteur (7), au moins deux états d'alignement différents étant déterminés dans l'unité d'évaluation (8) en fonction des signaux reçus du récepteur (7), dans lequel au moins un des deux états d'alignement différents appartient à une première catégorie, la première catégorie étant définie par la référence aux intensités des signaux des faisceaux lumineux (3) reçus par le ou les récepteurs (7), et dans lequel au moins un des deux états d'alignement différents appartient à une seconde catégorie, la seconde catégorie étant définie par le nombre et/ou l'exhaustivité des codes reçus, et une qualité d'alignement étant déterminée en fonction des états d'alignement, **caractérisée par le fait que** les états d'alignement individuels forment des contributions qui s'additionnent pour former la qualité d'alignement.
